# EUROPÄISCHE PATENTSCHRIFT

(11) **EP 4 291 518 B1**
(45) Veröffentlichungstag und Bekanntmachung des Hinweises auf die Patenterteilung: **21.08.2024**
(21) Anmeldenummer: 22720686.9
(22) Anmeldetag: 05.04.2022
(51) Int. Cl.: B65G 67/20, B60P 1/64, B65G 17/06

(54) **LADUNGSTRÄGER ZUM BELADEN UND ENTLADEN EINES CONTAINERS**
LOAD CARRIER FOR LOADING AND UNLOADING A CONTAINER
SUPPORT DE CHARGEMENT PERMETTANT DE CHARGER ET DE DÉCHARGER UN CONTENEUR

(30) Priorität: 06.04.2021 EP 21166952
(43) Veröffentlichungstag der Anmeldung: 20.12.2023
(73) Patentinhaber: PHS Logistiktechnik GmbH, 8054 Graz (AT)
(72) Erfinder: WOLFSCHLUCKNER, Andreas, 8055 Graz (AT); FRITZ, Matthias, 8041 Graz (AT)
(74) Vertreter: KLIMENT & HENHAPEL
(86) Internationale Anmeldenummer: PCT/EP2022/058948
(87) Internationale Veröffentlichungsnummer: WO 2022/214461

(56) Entgegenhaltungen:
- EP-A2- 1 760 032
- JP-A- S6 145 834
- US-A- 3 498 482

## Beschreibung

### GEBIET DER ERFINDUNG

Die vorliegend Erfindung betrifft einen Ladungsträger zum Beladen und Entladen eines Containers, insbesondere mit bzw. von Stückgut, umfassend starre Ladungsträgersegmente, wobei die Ladungsträgersegmente jeweils eine in eine dritte Richtung weisende Oberseite aufweisen und sich mit einer Segmentlänge in einer ersten Richtung erstrecken und mit einer Segmentbreite in einer zweiten Richtung, wobei die erste Richtung, die zweite Richtung und die dritte Richtung wechselseitig normal aufeinander stehen, wobei in einem ersten Zustand des Ladungsträgers die Oberseiten der Ladungsträgersegmente im Wesentlichen parallel zueinander und in erster Richtung gesehen hintereinander angeordnet sind, um eine im Wesentlichen ebene Ladefläche auszubilden,
wobei die Ladungsträgersegmente derart gelenkig miteinander verbunden sind, dass die Ladungsträgersegmente um parallel zur zweiten Richtung verlaufende Schwenkachsen gegeneinander verschwenkbar sind, wobei im ersten Zustand jeweils eines der Ladungsträgersegmente, das in der ersten Richtung gesehen auf ein jeweils anderes der Ladungsträgersegmente folgt, mit seiner Oberseite in Richtung der Oberseite des anderen Ladungsträgersegments verschwenkbar ist, um den Ladungsträger durch zumindest abschnittsweises spiralförmiges Aufrollen der Ladungsträgersegmente aus dem ersten Zustand in einen zweiten Zustand überführen zu können, wobei der Ladungsträger aus dem zweiten Zustand durch Abrollen in den ersten Zustand überführbar ist.

### STAND DER TECHNIK

Aus der EP 3061648 B1 ist ein System zum Entladen von Gegenständen aus einem Container bekannt, bei dem die Gegenstände auf einem Gurt, der den Boden des Containers bedeckt, angeordnet sind. An einer Entladebucht kann der Gurt samt den auf ihm angeordneten Gegenständen aus dem Container herausgezogen werden. Nachteilig an dieser Lösung ist eine nicht immer ausreichende Robustheit, insbesondere wenn es sich nicht vermeiden lässt, dass Transportfahrzeuge wie Gabelstapler auf den Gurt fahren und dabei den Gurt potentiell schädigen. Ein weiterer Nachteil ist, dass zur Beladung bzw. Wiederbeladung des Containers spezielle Rückziehmittel im oder am Container vorgesehen werden müssen, um den Gurt mit darauf angeordneten Gegenständen in den Container hinein ziehen zu können, wodurch sich der konstruktive Aufwand und damit auch Kosten erhöhen.

Aus der US 2820560 A ist ein Ladungsträger zum Be- und Entladen von Lastwägen bekannt, wobei einzelne, längliche Ladungsträgersegmente über Scharniere gelenkig miteinander verbunden sind, sodass die Ladungsträgersegmente zu Dreiecken gefaltet werden können, wenn sie nicht benötigt werden, was die Handhabung erleichtern soll.

Aus der EP 1760032 A2, aus der die Merkmale des Oberbegriffs von Anspruch 1 hervorgehen, ist eine Vorrichtung zum Be- und Entladen von Containern oder dergleichen mit Paletten bekannt, wobei paarweise parallel angeordnete flexible Glieder vorgesehen sind, die unter mehrere hintereinander angeordnete Paletten geschoben werden können. Die Glieder sind über Verbindungsglieder gelenkig miteinander verbunden und können zur Aufbewahrung im Wesentlichen spiralförmig auf einem polygonalen Rad aufgewickelt werden.

### AUFGABE DER ERFINDUNG

Es ist daher Aufgabe der vorliegenden Erfindung, eine Lösung zum Entladen und Beladen von Containern zur Verfügung zu stellen, die die oben genannten Nachteile vermeidet. Insbesondere soll die erfindungsgemäße Lösung hinreichend mechanisch stabil sein und ohne erhöhten konstruktiven Aufwand neben dem Entladen auch das Beladen ermöglichen.

### DARSTELLUNG DER ERFINDUNG

Zur Lösung der genannten Aufgabe ist es bei einem Ladungsträger zum Beladen und Entladen eines Containers, umfassend starre Ladungsträgersegmente, wobei die Ladungsträgersegmente jeweils eine in eine dritte Richtung weisende Oberseite aufweisen und sich mit einer Segmentlänge in einer ersten Richtung erstrecken und mit einer Segmentbreite in einer zweiten Richtung, wobei die erste Richtung, die zweite Richtung und die dritte Richtung wechselseitig normal aufeinander stehen, wobei in einem ersten Zustand des Ladungsträgers die Oberseiten der Ladungsträgersegmente im Wesentlichen parallel zueinander und in erster Richtung gesehen hintereinander angeordnet sind, um eine im Wesentlichen ebene Ladefläche auszubilden, wobei die Ladungsträgersegmente derart gelenkig miteinander verbunden sind, dass die Ladungsträgersegmente um parallel zur zweiten Richtung verlaufende Schwenkachsen gegeneinander verschwenkbar sind, wobei im ersten Zustand jeweils eines der Ladungsträgersegmente, das in der ersten Richtung gesehen auf ein jeweils anderes der Ladungsträgersegmente folgt, mit seiner Oberseite in Richtung der Oberseite des anderen Ladungsträgersegments verschwenkbar ist, um den Ladungsträger durch zumindest abschnittsweises spiralförmiges Aufrollen der Ladungsträgersegmente aus dem ersten Zustand in einen zweiten Zustand überführen zu können, wobei der Ladungsträger aus dem zweiten Zustand durch Abrollen in den ersten Zustand überführbar ist, erfindungsgemäß vorgesehen, dass die Ladungsträgersegmente jeweils mindestens eine Deckplatte aufweisen, wobei die Deckplatten Rillenstrukturen aufweisen, die die Oberseiten der Ladungsträgersegmente ausbilden, wobei vorzugsweise die Deckplatten durch Extrusion gefertigt sind, dass die Ladungsträgersegmente jeweils mindestens zwei Trägerlamellen aufweisen, an denen die mindestens eine Deckplatte befestigt, insbesondere festgeschraubt, ist, wobei die Trägerlamellen des jeweiligen Ladungsträgersegments in der zweiten Richtung verlaufen und parallel zueinander angeordnet sind, wobei jeweils zwei der Trägerlamellen des jeweiligen Ladungsträgersegments in erster Richtung gesehen hintereinander angeordnet sind, wobei vorzugsweise die Trägerlamellen durch Extrusion gefertigt sind, und dass die Trägerlamellen aufeinander folgender Ladungsträgersegmente so geformt sind, dass sie im ersten Zustand des Ladungsträgers in erster Richtung abschnittweise überlappen.

Typischerweise erstrecken sich die Ladungsträgersegmente weiters mit einer Segmenthöhe in der dritten Richtung.

Das Beladen und Entladen betrifft insbesondere Stückgut, wobei hiervon sowohl einzelne Pakete bzw. Einzelstücke als auch Sammelgut oder palettierte Gegenstände mitumfasst sind.

Aus der Eignung für das Beladen und Entladen von Containern ergibt sich natürlich u.a. auch eine Eignung für das Beladen und Entladen von Ladeflächen, insbesondere von Fahrzeugen wie z.B. von Lastkraftwagen, oder Laderäumen, insbesondere von Fahrzeugen wie z.B. von Lastkraftwagen. Entsprechend sind hier und im Folgenden solche Ladeflächen und Laderäume stets mitgemeint, wenn von Containern die Rede ist.

Indem die Ladungsträgersegmente - im Gegensatz zu einem Gurt, beispielsweise - starr ausgeführt sind, wird einerseits eine gesteigerte mechanische Stabilität und Robustheit im Vergleich zu aus dem Stand der Technik bekannten Lösungen erzielt. Andererseits erlauben die starren Ladungsträgersegmente nicht nur ein Ziehen des Ladungsträgers, insbesondere um diesen samt darauf angeordnetem Ladungsgut aus einem Container zu ziehen und so den Container zu entladen, sondern auch ein Drücken bzw. Schieben des Ladungsträgers in die entgegengesetzte Richtung, insbesondere um den Ladungsträger samt darauf angeordnetem Ladungsgut in einen Container hinein zu schieben und so den Container zu beladen. Das Beladen kann zudem auch so erfolgen, dass Stückgut auf dem Ladungsträger angeordnet wird, während dieser in den Container hinein geschoben wird.

Im Gegensatz zu aus dem Stand der Technik bekannten Schubböden, die aus einzeln längsverschiebbaren Lamellen bestehen, wird der gesamte Ladungsträger auf einmal beim Entladen des Containers durch entsprechendes Ziehen am Ladungsträger bzw. beim Beladen durch entsprechendes Drücken bzw. Schieben bewegt. Entsprechend erfolgen das Entladen sowie das Beladen mit dem Ladungsträger wesentlich schneller als bei bekannten Schubböden. Zudem kann auch der Übergang auf eine weiterführende Fördertechnik schonender gestaltet werden, da beim Bewegen des Ladungsträgers keine Scherkräfte vom Ladungsträger auf das darauf angeordnete Fördergut wirken, weil die Ladungsträgersegmente nicht, insbesondere nicht in der ersten Richtung, gegeneinander verschoben werden.

Die Oberseiten der Ladungsträgersegmente liegen gegenüber von Unterseiten der Ladungsträgersegmente, wobei die Oberseiten und Unterseiten voneinander weg weisen. Die dritte Richtung wird wie die erste und zweite Richtung durch das jeweilige Ladungsträgersegment definiert und weist von der Unterseite des jeweiligen Ladungsträgersegments zu dessen Oberseite, und in diesem Sinne weist die Oberseite in die dritte Richtung. Das bedeutet aber z.B. nicht, dass die jeweilige Oberseite eine Normalebene auf die dritte Richtung ausbilden muss. Insbesondere müssen die Oberseiten nicht eben ausgebildet sein, sondern können Unebenheiten aufweisen, etwa um einen besseren Halt für das Ladungsgut zu generieren.

Auf den Oberseiten der Ladungsträgersegmente kann im ersten Zustand des Ladungsträgers Ladungsgut angeordnet werden bzw. sein. Typischerweise weisen dabei die Oberseiten - bzw. weist dabei die dritte Richtung - zumindest mit einer Richtungskomponente gegen die Schwerkraftrichtung. In diesem Sinne werden die Ladungsträgersegmente beim Aufrollen typischerweise nacheinander "nach oben" verschwenkt.

Der erste Zustand des Ladungsträgers könnte auch als Betriebszustand bezeichnet werden oder als ein für die Beladung (mit Ladungsgut) vorgesehener Zustand. Dass die Oberseiten der Ladungsträgersegmente im Wesentlichen parallel zueinander (und in erster Richtung gesehen hintereinander) angeordnet sind, ist so zu verstehen, dass hiervon im Wesentlichen alle Ladungsträgersegmente des Ladungsträgers betroffen sind. Geringfügige Abweichungen von besagter Anordnung können sich z.B. aus technisch unvermeidlichen Fertigungsgründen ergeben oder aus der Anordnung des Ladungsträgers in einem konkreten Container mit spezifischen Platzverhältnissen. Insbesondere in letzterem Fall ist es nicht ausgeschlossen, dass z.B. ein letztes und/oder erstes Ladungsträgersegment mit seiner Oberseite nicht ganz parallel zu den anderen Ladungsträgersegmenten liegt.

Hier und im Folgenden ist unter "parallel" stets auch "antiparallel" zu verstehen, sofern nicht explizit anderes angegeben ist.

Typischerweise ist der Ladungsträger so dimensioniert, dass seine Ladefläche sich über die gesamte für die Beladung nutzbare Fläche des Containers / Ladefläche des Fahrzeugs / Bodenfläche des Laderaums des Fahrzeugs erstreckt bzw. diese bedecken kann.

Dass die durch den Ladungsträger im ersten Zustand ausgebildete Ladefläche im Wesentlichen eben ist, ist so zu verstehen, dass sich die Ladefläche in einer Ebene erstreckt, dass aber natürlich geringfügige Abweichungen möglich sind, die z.B. aus Fertigungsgründen technisch unvermeidlich sind oder sich aus der Anordnung des Ladungsträgers in einem konkreten Container mit spezifischen Platzverhältnissen ergeben. Hiervon abgesehen muss die Oberseite der Ladungsträgersegmente, wie oben bereits erläutert, nicht eben ausgeführt sein, weshalb die Oberfläche der Ladefläche nicht eben zu sein braucht.

Der zweite Zustand des Ladungsträgers könnte auch als Speicherzustand bezeichnet werden, der eine extrem platzsparende Unterbringung des Ladungsträgers, insbesondere an einer Entladebucht, ermöglicht, was einen weiteren Vorteil gegenüber bekannten Lösungen, wie z.B. Schubböden, darstellt. In einer Querschnittsebene normal auf die zweite Richtung (bzw. die zweiten Richtungen) ergibt sich im zweiten Zustand zumindest abschnittsweise eine Spiralform oder Schneckenform des Ladungsträgers bzw. zumindest abschnittsweise eine spiralförmige/schneckenförmige Anordnung der aufeinander folgenden Ladungsträgersegmente.

Dabei kann der Ladungsträger in einer entsprechend dafür eingerichteten Speichereinheit, beispielsweise einer Speicherkassette, zumindest abschnittsweise spiralförmig angeordnet werden, um eine geschützte Unterbringung des Ladungsträgers im zweiten Zustand zu ermöglichen. Die Speichereinheit kann entsprechend an der Entladebucht vorgesehen sein bzw. dort angeordnet werden.

Zur platzsparendsten Unterbringung des Ladungsträgers kann es vorgesehen sein, dass dieser im zweiten Zustand vollständig spiralförmig aufgerollt wird, dass also die Abfolge sämtlicher Ladungsträgersegmente eine spiralförmige Anordnung ergibt. Typischerweise sind jedoch im zweiten Zustand nicht sämtliche Ladungsträgersegmente aufgerollt bzw. in einer spiralförmigen Anordnung, sondern wird das Aufrollen gestoppt, sobald der Ladungsträger vollständig aus dem Container herausgezogen ist, wobei in der Regel zumindest einige wenige Ladungsträgersegmente, inklusive des letzten Ladungsträgersegments, weiterhin im Wesentlichen parallel zueinander angeordnet verbleiben.

Beim Überführen des Ladungsträgers aus dem zweiten Zustand in den ersten Zustand durch Abrollen werden die Ladungsträgersegmente klarerweise in die (im Vergleich zum Aufrollen) entgegengesetzte Richtung zurückgeschwenkt.

Bei einer bevorzugten Ausführungsform des erfindungsgemäßen Ladungsträgers ist vorgesehen, dass im ersten Zustand des Ladungsträgers das jeweils eine der Ladungsträgersegmente mit seiner Oberseite in Richtung der Oberseite des jeweils anderen Ladungsträgersegments um einen ersten Schwenkwinkel verschwenkbar ist, der maximal 45°, bevorzugt maximal 30°, beträgt, und dass im ersten Zustand des Ladungsträgers das jeweils eine der Ladungsträgersegmente mit seiner Oberseite von der Oberseite des jeweils anderen Ladungsträgersegments weg um einen zweiten Schwenkwinkel verschwenkbar ist, der maximal 3°, bevorzugt maximal 1°, besonders bevorzugt 0°, beträgt. Diese Beschränkung des Bereichs, in welchem die Ladungsträgersegmente verschwenkbar sind, bewirkt eine besonders hohe Stabilität des Ladungsträgers sowohl beim Abrollen bzw. beim Überführen vom zweiten in den ersten Zustand als auch beim Drücken bzw. Schieben des Ladungsträgers, insbesondere um den Ladungsträger samt darauf angeordnetem Ladungsgut in einen Container hinein zu schieben und so den Container zu beladen.

Grundsätzlich genügt es für das Hin- und Herüberführen zwischen dem ersten und zweiten Zustand, wenn der zweite Schwenkwinkel gleich null ist. Ein zweiter Schwenkwinkel, der etwas größer als 0° ist, kann sich jedoch als günstig erweisen, da hierdurch ein gewisses Spiel ermöglicht wird, wodurch der Ladungsträger etwas flexibler wird und eine Neigung zum Verklemmen beim Hin- und Herüberführen zwischen dem ersten und zweiten Zustand zuverlässig vermieden werden kann.

Die genannte Beschränkung des Schwenkbereichs kann z.B. in an sich bekannter Weise durch entsprechend geformte Schwenkglieder erreicht werden, die zur gelenkigen Verbindung der Ladungsträgersegmente vorgesehen sind, wobei jedes Ladungsträgersegment mehrere, vorzugsweise zwei, Schwenkglieder aufweist, die in zweiter Richtung gesehen hintereinander angeordnet sein können. Entsprechend ist es bei einer bevorzugten Ausführungsform des erfindungsgemäßen Ladungsträgers vorgesehen, dass zur gelenkigen Verbindung der Ladungsträgersegmente die Ladungsträgersegmente jeweils mehrere, vorzugsweise zwei, Schwenkglieder aufweisen, wobei die Schwenkglieder von zwei aufeinander folgenden Ladungsträgersegmenten verschwenkbar ineinander greifen.

Aus Festigkeitsgründen sind die Schwenkglieder vorzugsweise aus Stahl gefertigt, beispielsweise durch Laserschneiden oder Fräsen.

Wie gesagt, kann durch geeignete Formgebung der Schwenkglieder die Beschränkung des Schwenkbereichs einfach verwirklicht werden. Entsprechend ist es bei einer besonders bevorzugten Ausführungsform des erfindungsgemäßen Ladungsträgers vorgesehen, dass die Größe des ersten Schwenkwinkels und die Größe des zweiten Schwenkwinkels durch Formschluss der ineinander greifenden Schwenkglieder aufeinander folgender Ladungsträgersegmente beschränkt sind.

Beim erfindungsgemäßen Ladungsträger ist vorgesehen, dass die Ladungsträgersegmente jeweils mindestens eine Deckplatte aufweisen, wobei die Deckplatten Rillenstrukturen aufweisen, die die Oberseiten der Ladungsträgersegmente ausbilden, wobei vorzugsweise die Deckplatten durch Extrusion gefertigt sind.

Zur Ausbildung der Oberseite der Ladungsträgersegmente können mehrere Deckplatten vorgesehen sein, die insbesondere in der zweiten Richtung gesehen hintereinander angeordnet sein können. Entsprechend können unterschiedlich große Oberseiten mit einfach und kostengünstig herzustellenden Deckplatten in wenigen Größen, insbesondere lediglich in einer Einheitsgröße, realisiert werden.

Die Rillenstruktur erweist sich als günstig für den Halt des Ladungsguts auf dem Ladungsträger. Darüberhinaus kann die Rillenstruktur für einen möglichst schonenden Übergang auf weiterführende Fördertechnik ausgenutzt werden, indem ein Übergangsstück zwischengeschaltet wird, das eine korrespondierende Rillenstruktur aufweist, die in die Rillenstruktur der Ladungsträgersegmente eingreift. Hierdurch kann das Übergangsstück das auf den Deckplatten angeordnete Stückgut unterfahren, um ein widerstandsarmes, stufenloses Gleiten des Stückguts auf das Übergangsstück (genauer auf eine der Unterseite gegenüberliegenden Oberseite des Übergangsstücks) und in der Folge auf die weiterführende Fördertechnik zu ermöglichen.

Die Fertigung der Deckplatten durch Extrusion erweist sich im Hinblick auf die Rillenstruktur als besonders vorteilhaft, da eine teure mechanische Bearbeitung zur Herstellung der Rillenstruktur entfallen kann.

Die Fertigung möglichst vieler Elemente des Ladungsträgers durch Extrusion ermöglicht eine sehr wirtschaftliche Bauweise des Ladungsträgers. Hier und im Folgenden ist unter "Extrusion" ein Verfahren zu verstehen, das nicht auf Kunststoffe beschränkt ist, sondern insbesondere auch Metalle betreffen kann, wobei für Metalle auch die Bezeichnung "Strangpressen" geläufig ist.

Wenn hier und im Folgenden von Extrusion die Rede ist, können insbesondere folgende Materialien für die Fertigung der entsprechenden Elemente verwendet werden, die sich im Hinblick auf ihre mechanischen, physikalischen und chemischen Materialeigenschaften und/oder auf ihre Wirtschaftlichkeit als besonders günstig für den Ladungsträger erweisen: AluminiumLegierungen, wie sie für Extrusion (bzw. für Strangpressen) an sich bekannt sind, wie z.B. EN AW-6060, EN AW-1050, EN AW-6082 oder EN AW-5083.

Zur mechanisch stabilen und gleichzeitig konstruktiv einfachen - und damit kostengünstigen - Befestigung der Deckplatten ist es beim erfindungsgemäßen Ladungsträger vorgesehen, dass die Ladungsträgersegmente jeweils mindestens zwei Trägerlamellen aufweisen, an denen die mindestens eine Deckplatte befestigt, insbesondere festgeschraubt, ist, wobei die Trägerlamellen des jeweiligen Ladungsträgersegments in der zweiten Richtung verlaufen und parallel zueinander angeordnet sind, wobei jeweils zwei der Trägerlamellen des jeweiligen Ladungsträgersegments in erster Richtung gesehen hintereinander angeordnet sind, wobei vorzugsweise die Trägerlamellen durch Extrusion gefertigt sind.

Beim erfindungsgemäßen Ladungsträger ist vorgesehen, dass die Trägerlamellen aufeinander folgender Ladungsträgersegmente so geformt sind, dass sie im ersten Zustand des Ladungsträgers in erster Richtung abschnittweise überlappen.

Dies ermöglicht eine Abstützung der Trägerlamellen gegeneinander im überlappenden Bereich, wenn, etwa bei schwerem Stückgut, eine besonders hohe Belastung parallel zur dritten Richtung auf die Ladungsträgersegmente wirkt.

Außerdem wird verhindert, dass Schmutz zwischen den Ladungsträgersegmenten durch den Ladungsträger im ersten Zustand fallen kann und so ggf. eine unter dem Ladungsträger befindliche Fläche, die insbesondere als Gleitfläche ausgeführt sein kann, verschmutzen kann, was in weiterer Folge auch zu einer Behinderung der Bewegung es Ladungsträgers auf der (Gleit-)Fläche führen könnte.

Vorzugsweise greifen die abschnittsweise überlappenden Trägerlamellen lose ineinander, sodass ein Spalt zwischen den Trägerlamellen ausgebildet ist, um eine hinreichende Flexibilität des Ladungsträgers sicherzustellen. Bei besagter hoher Belastung kann es in diesem Fall zu einem gewissen abschnittsweise Nachgeben der involvierten Ladungsträgersegmente kommen, bis sich diese gegenseitig abstützen.

Um das Aufrollen bzw. Abrollen des Ladungsträgers in möglichst exakter bzw. definierter Weise zu ermöglichen, ist es bei einer bevorzugten Ausführungsform des erfindungsgemäßen Ladungsträgers vorgesehen, dass zur Führung des Ladungsträgers beim Aufrollen und Abrollen die Ladungsträgersegmente jeweils mehrere, vorzugsweise zwei, Führungsglieder aufweisen, die in zweiter Richtung gesehen hintereinander angeordnet sind, wobei vorzugsweise parallel zur zweiten Richtung gesehen die Führungsglieder das jeweilige Ladungsträgersegment nach außen zumindest abschnittsweise begrenzen.

Klarerweise sind die Führungsglieder vorzugsweise im Wesentlichen starr, d.h. insbesondere nicht als Rollen, ausgeführt.

Aus Festigkeitsgründen sind die Führungsglieder vorzugsweise aus Stahl gefertigt, beispielsweise durch Laserschneiden oder Fräsen.

Gemäß dem oben Gesagten ist auch in diesem Fall unter "parallel" auch "antiparallel" zu verstehen, d.h. die Führungsglieder können das jeweilige Ladungsträgersegment sowohl in als auch gegen die zweite Richtung gesehen zumindest abschnittsweise abschließen bzw. nach außen begrenzen. In zweiter Richtung gesehen sind die Führungslieder dann entsprechend in einem Anfangs- und Endbereich des jeweiligen Ladungsträgersegments angeordnet.

Die Führungsglieder der Ladungsträgersegmente können beim Aufrollen bzw. Abrollen mit entsprechenden Führungsmitteln zusammenwirken bzw. sind für dieses Zusammenwirken ausgelegt. Als Führungsmittel kommen beispielsweise an sich bekannte Gleitführungen in Frage, die z.B. durch entsprechend geformte Profile ausgebildet sein können, welche Profile wiederum aus geeigneten Materialien (umfassend reibungsarme Kunststoffe) aufgebaut oder mit solchen Materialien beschichtet sein können. Ein weiteres Beispiel für geeignete Führungsmittel wären an sich bekannte Rollenführungen, wobei Führungsrollen so angeordnet sind, dass der gewünschte spiralförmige Verlauf des Ladungsträgers erzielt wird.

Vorzugsweise sind die Führungsmittel in der Speichereinheit vorgesehen.

Bei einer besonders bevorzugten Ausführungsform des erfindungsgemäßen Ladungsträgers ist vorgesehen, dass die Führungsglieder entlang der ersten Richtung eine zumindest abschnittsweise gekrümmte Kontur aufweisen. Dies erweist sich im Hinblick auf eine besonders exakte Führung als besonders vorteilhaft, weil die gekrümmte Kontur eine "flächige" Führung auf mehreren Führungsrollen gleichzeitig oder großen Abschnitten von Führungsschienen, insbesondere in der Speichereinheit, erlaubt. Bei einer geradlinig verlaufenden Kontur würde sich hingegen nur der Kontakt mit einer Führungsrolle bzw. mit einer geringeren Kontaktfläche ergeben.

Um die problemlose Bewegung des Ladungsträgers zu ermöglichen, ist es bei einer bevorzugten Ausführungsform des erfindungsgemäßen Ladungsträgers vorgesehen, dass die Ladungsträgersegmente ein erstes Ladungsträgersegment und ein letztes Ladungsträgersegment umfassen, wobei in erster Richtung gesehen zwischen dem ersten Ladungsträgersegment und dem letzten Ladungsträgersegment die restlichen Ladungsträgersegmente angeordnet sind, wenn sich der Ladungsträger im ersten Zustand befindet, und dass im Bereich des ersten Ladungsträgersegments mindestens ein erstes Verbindungselement zur Verbindung des Ladungsträgers mit einer Zug- und Schubvorrichtung vorgesehen ist. Die Zug- und Schubvorrichtung dient zum Ziehen des Ladungsträgers (bzw. der Ladungsträgersegmente) in einer Zugrichtung, um diesen beim Entladen aus dem Container zu ziehen, sowie zum Drücken bzw. Schieben des Ladungsträgers (bzw. der Ladungsträgersegmente) in einer zur Zugrichtung entgegengesetzten Schubrichtung, um diesen beim Beladen in den Container zu schieben. Geeignete erste Verbindungselemente sind an sich bekannt und können z.B. unterschiedlichste Formen von Haken und Ösen umfassen.

Bei einer besonders bevorzugten Ausführungsform des erfindungsgemäßen Ladungsträgers ist vorgesehen, dass im Bereich des letzten Ladungsträgersegments mindestens ein in der dritten Richtung abragendes Wandelement vorgesehen ist. Das mindestens eine Wandelement stellt sicher, dass beim Entladen möglichst kein Ladungsgut gegen die Zugrichtung bzw. gegen die erste Richtung vom Ladungsträger rutschen kann, wodurch eine möglichst vollständige Entladung des Containers erreicht wird.

Insbesondere kann dabei das mindestens eine Wandelement so dimensioniert sein, dass die Querschnittsfläche des Innenraums des Containers bzw. des Laderaums des Transportfahrzeugs im Wesentlichen vollständig abgedeckt wird. Das mindestens eine Wandelement verhindert somit vollständig ein Herunterfallen des Stückguts während der Entladung, sodass keine Güter im Container bzw. Laderaum zurückbleiben.

Gemäß dem oben Gesagten ist erfindungsgemäß auch ein System umfassend einen erfindungsgemäßen Ladungsträger vorgesehen, das System weiters umfassend eine Zug- und Schubvorrichtung zum Ziehen des Ladungsträgers in einer Zugrichtung aus einem Container und zum Schieben des Ladungsträgers in einer entgegengesetzten Schubrichtung in einen Container, wobei die Zug- und Schubvorrichtung mindestens ein zweites Verbindungselement zur Verbindung mit dem Ladungsträger aufweist sowie eine Speichereinheit mit Führungsmitteln, insbesondere Führungsrollen, zum Aufrollen des Ladungsträgers, um diesen zumindest abschnittsweise im zweiten Zustand aufzubewahren. Selbstverständlich führen die Führungsmittel den Ladungsträger bzw. die Ladungsträgersegmente auch beim Abrollen, d.h. beim Überführen des Ladungsträgers vom zweiten in den ersten Zustand.

Das System kann z.B. an einer Be-/Entladebucht, wo Lastkraftwägen zur Be-/Entladung ihrer Container bzw. Laderäume oder Ladeflächen andocken, fix installiert sein oder kann portabel sein, um problemlos an der Entladebucht angeordnet zu werden.

Geeignete zweite Verbindungselemente zur Verbindung mit dem Ladungsträger bzw. mit zumindest einem Ladungsträgersegment des Ladungsträgers sind an sich bekannt, z.B. Haken, Ösen oder Klemmen.

Das zweite Verbindungselement ist insbesondere zur Verbindung bzw. Kopplung mit dem ersten Verbindungselement des Ladungsträgers ausgelegt.

Als Führungsmittel der Speichereinheit kommen die weiter oben bereits beschriebenen Führungsmittel in Frage, also insbesondere Profile, in denen der Ladungsträger, genauer die Ladungsträgersegmente, gleitend geführt werden oder Anordnungen von Führungsrollen.

Die Führungsmittel können dabei insbesondere für das Zusammenwirken mit den Führungsgliedern der Ladungsträgersegmente ausgelegt sein.

Die Speichereinheit kann z.B. in Form einer Kassette bzw. Trommel ausgebildet sein.

Die Zug- und Schubvorrichtung kann insbesondere mindestens einen Elektromotor umfassen, um den Ladungsträger zu bewegen. Um eine konstruktiv einfache Wirkverbindung zwischen der Zug-und Schubvorrichtung einerseits und dem mindestens einen zweiten Verbindungselement bzw. dem Ladungsträger andererseits bereitzustellen, ist es bei einer bevorzugten Ausführungsform des erfindungsgemäßen Systems vorgesehen, dass das mindestens eine zweite Verbindungselement mit einem Verbindungsstück verbunden ist, welches Verbindungsstück durch die Zug- und Schubvorrichtung bewegbar ist und mehrere starre Verbindungsstücksegmente umfasst, die im Wesentlichen wie die Ladungsträgersegmente des Ladungsträgers gelenkig miteinander verbunden sind, um das Verbindungsstück gemeinsam mit zumindest einem Abschnitt des Ladungsträgers im zweiten Zustand in der Speichereinheit aufbewahren zu können. Indem das Verbindungsstück mit seinen gelenkig miteinander verbundenen Verbindungsstücksegmenten im Wesentlichen genauso wie der Ladungsträger mit seinen Ladungsträgersegmenten aufgebaut ist, kann eine kostengünstige Herstellung erreicht werden. Weiters kann aufgrund dieser Konstruktion das Verbindungsstück gewissermaßen als Verlängerung des Ladungsträgers über das erste Ladungsträgersegment hinaus fungieren und von der Zug- und Schubvorrichtung genauso bewegt werden, um gemeinsam mit dem Ladungsträger in der Speichereinheit aufgerollt oder aus der Speichereinheit abgerollt zu werden. Dabei wäre es denkbar, dass insbesondere eine Länge der Verbindungsstücksegmente sich von der Segmentlänge der Ladungsträgersegmente - geringfügig - unterscheidet und beispielsweise 10 cm statt 20 cm beträgt.

Denkbar wäre es z.B., dass in der Speichereinheit eine Art Welle der Zug- und Schubvorrichtung vorgesehen ist, die mittels mindestens eines Motors, insbesondere Elektromotors, in eine erste Drehrichtung sowie in eine entgegengesetzte zweite Drehrichtung antreibbar ist, und dass das Verbindungsstück mit einem ersten Endbereich an der Welle befestigt ist, wobei der erste Endbereich einem zweiten Endbereich gegenüberliegt und das zweite Verbindungselement im zweiten Endbereich befestigt ist. Bei Drehung der Welle in der ersten Drehrichtung werden entsprechend das Verbindungsstück und in weiterer Folge der mit dem Verbindungsstück verbundene Ladungsträger um die Welle herum spiralförmig aufgerollt bzw. aufgewickelt, wodurch der Ladungsträger mittels des Verbindungsstücks aus dem Container gezogen werden kann. Bei darauffolgender Drehung der Welle in der zweiten Drehrichtung werden der Ladungsträger und in weiterer Folge auch das Verbindungsstück entsprechend wieder von der Welle abgerollt bzw. abgewickelt, wodurch der Ladungsträger über das Verbindungsstück in den Container hinein geschoben bzw. gedrückt werden kann.

Insbesondere kann eine konstruktive Beschränkung des Schwenkwinkelbereichs der Verbindungsstücksegmente analog zur Beschränkung des Schwenkwinkelbereichs der Ladungsträgersegmente - in einer Richtung maximal 45°, bevorzugt maximal 30°, und in der entgegengesetzten Richtung maximal 3°, bevorzugt maximal 1°, besonders bevorzugt 0° - vorgesehen sein, um das Schieben bzw. Drücken beim Abrollen besonders effektiv und sicher zu gestalten.

Bei einer bevorzugten Ausführungsform des erfindungsgemäßen Systems ist vorgesehen, dass die Zug- und Schubvorrichtung einen Reibradantrieb zum Bewegen des Ladungsträgers umfasst, der in der Zugrichtung gesehen vor der Speichereinheit angeordnet ist. Dies stellt eine konstruktiv besonders einfache Lösung dar, da die Speichereinheit lediglich mit den Führungsmitteln ausgestattet werden muss und keine Antriebsmittel der Zug- und Schubvorrichtung in der Speichereinheit angeordnet werden müssen.

Der Reibradantrieb umfasst klarerweise mindestens ein Reibrad, welches dafür vorgesehen ist, mit einem Richtungsanteil parallel/antiparallel zur dritten Richtung gegen die Ladungsträgersegmente bzw. evtl. gegen die Verbindungsstücksegmente zu drücken und diese gegen eine Gegenfläche zu pressen, um hinreichend Reibung aufzubauen, sodass bei Drehung des Reibrads der Ladungsträger bzw. evtl. das Verbindungsstück bewegt wird. Durch Umkehrung der Drehrichtung des Reibrads kann der Ladungsträgers somit sowohl aus dem Container herausgezogen werden als auch in den Container hinein geschoben werden.

Um das entladene Ladegut, insbesondere Stückgut, nahtlos weiterfördern zu können, ist es bei einer bevorzugten Ausführungsform des erfindungsgemäßen Systems vorgesehen, dass ein weiterführender Förderer zur Förderung in einer Förderebene, die mit der ersten Richtung der Ladungsträgersegmente des im ersten Zustand befindlichen Ladungsträgers einen spitzen Winkel einschließt, vorgesehen ist, wobei ein dem weiterführenden Förderer vorgeschaltetes Übergangsstück vorgesehen ist, das dazu eingerichtet ist, mit einer Unterseite auf der Oberseite der Ladungsträgersegmente abzugleiten, wobei vorzugsweise die Unterseite des Übergangsstücks eine Rillenstruktur aufweist. Der weiterführende Förderer kann in an sich bekannter Weise ausgeführt sein, beispielsweise als Bandförderer.

Der spitze Winkel liegt typischerweise in einem Bereich von 6° bis 25°.

Im Hinblick auf das Übergangsstück wird grundsätzlich auf die Ausführungen weiter oben verwiesen. Wie bereits erwähnt, gewährleistet das Übergangsstück ein widerstandsarmes, stufenloses Gleiten des Ladeguts vom Ladungsträger auf den weiterführenden Förderer, wobei das Ladegut auf einer der Unterseite des Übergangsstücks gegenüberliegenden Oberseite des Übergangsstücks abgleitet.

Die Oberseite des vorgeschaltete Übergangsstück kann mit der ersten Richtung der Ladungsträgersegmente des im ersten Zustand befindlichen Ladungsträgers einen Winkel einschließen, der etwas flacher als der spitze Winkel ist, um den Übergang noch widerstandsärmer zu gestalten, z.B. einen Winkel von ca. 10° bei einem spitzen Winkel von ca. 22°.

Vorzugsweise greifen die Rillenstruktur des Übergangsstücks und Rillenstrukturen der Deckplatten ineinander, d.h. die Rillenstrukturen sind hierfür aufeinander abgestimmt. Hierdurch kann das Übergangsstück das auf der Deckplatte angeordnete Ladegut unterfahren, um für das Ladegut den Übergang vom Ladungsträger auf das Übergangsstück so stufenlos und widerstandsarm wie möglich zu machen.

Indem die Förderebene des weiterführenden Förderers zur Ladefläche des Ladungsträgers geneigt ist, kann das Ladegut bzw. Stückgut rasch auf ein höheres Niveau, das insbesondere höher als jenes der Entladebucht ist, gebracht werden, um den Weitertransport zu vereinfachen. Gleichzeitig kann durch diese Maßnahme am Niveau der Entladebucht Raum zur Unterbringung der Zug- und Schubvorrichtung und der Speichereinheit gewonnen werden.

Weiters kann bei einer besonders bevorzugten Ausführungsform des erfindungsgemäßen Ladungsträgers bzw. Systems vorgesehen sein, dass in erster Richtung gesehen nach dem mindestens einen Wandelement mindestens eine Abgleitplatte vorgesehen ist, die schräg vom Wandelement in Richtung Ladefläche verläuft, wobei die Abgleitplatte vom Übergangsstück zumindest abschnittsweise unterfahrbar ist. D.h. es besteht zumindest ein kleiner Spalt zwischen der Ladefläche (bzw. der Oberseite der Ladungsträgersegmente) und der Abgleitplatte. Dieser Spalt kann z.B. mit einer federbelasteten Klappe abgedeckt sein, die schwenkbar an der Abgleitplatte gelagert sein kann und zwischen der Ladefläche und der Abgleitplatte angeordnet ist. Die Klappe wird somit vom Übergangsstück weggedrückt, wenn sich die Abgleitplatte (in Zugrichtung) auf das Übergangsstück zu bewegt und diesem hinreichend nahe kommt. Das Übergangsstück wird dabei mit einem Anfangsbereich unter der Abgleitplatte angeordnet. Typischerweise verhindert ein Formschluss ein vollständiges Unterfahren der Abgleitplatte durch das Übergangsstück. Somit kann sämtliches Stückgut von der Abgleitplatte auf das Übergangsstück abgleiten und schließlich auf den weiterführenden Förderer bewegt werden.

### KURZE BESCHREIBUNG DER FIGUREN

Die Erfindung wird nun anhand eines Ausführungsbeispiels näher erläutert. Die Zeichnungen sind beispielhaft und sollen den Erfindungsgedanken zwar darlegen, ihn aber keinesfalls einengen oder gar abschließend wiedergeben.

Dabei zeigt:
- Fig. 1: eine schematische Schnittansicht eines Systems umfassend einen erfindungsgemäßen Ladungsträger zum Beladen und Entladen eines Containers an einer Be-/Entladebucht
- Fig. 2: eine schematische axonometrische Ansicht des Ladungsträgers in einem ersten Zustand
- Fig. 3: eine schematische axonometrische Detailansicht von mehreren Ladungsträgersegmenten des Ladungsträgers gemäß Fig. 2
- Fig. 4: eine schematische axonometrische Detailansicht eines einzelnen Ladungsträgersegments
- Fig. 5: eine schematische Seitenansicht mehrerer Ladungsträgersegmente des Ladungsträgers in einem zweiten Zustand
- Fig. 6: eine schematische Seitenansicht analog zu Fig. 5, wobei Führungsglieder ausgeblendet sind
- Fig. 7: eine schematische Schnittansicht mehrerer Ladungsträgersegmente des Ladungsträgers im ersten Zustand
- Fig. 8: eine vergrößerte Schnittansicht des Systems aus Fig. 1
- Fig. 9: eine axonometrische Detailansicht eines Übergangsstücks des Systems aus Fig. 1

### WEGE ZUR AUSFÜHRUNG DER ERFINDUNG

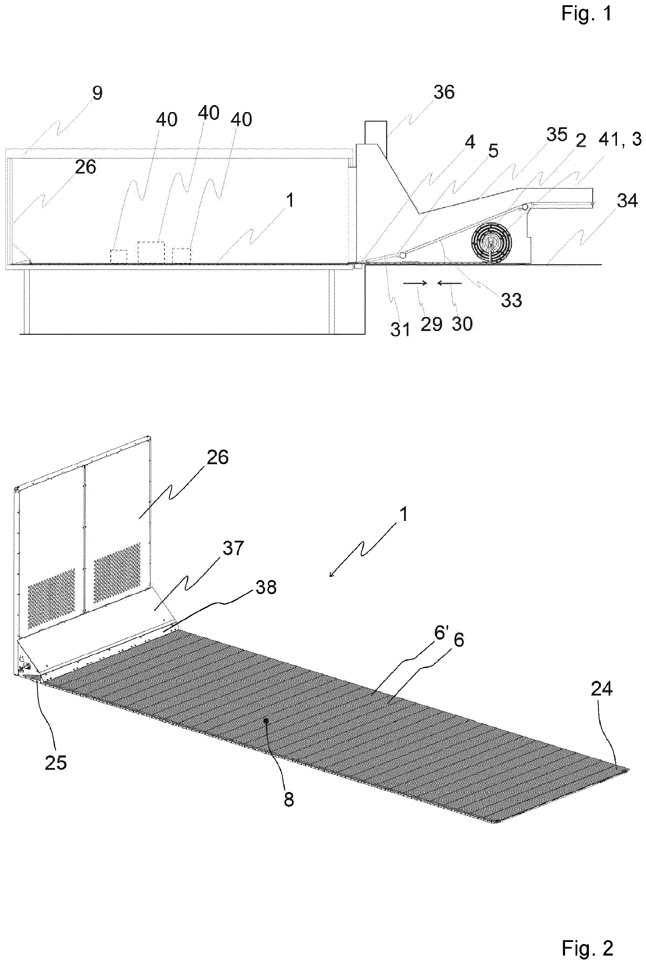

In der schematischen Schnittansicht der Fig. 1 ist ein Container 9 an einer Be-/Entladebucht 34 dargestellt, wobei ein erfindungsgemäßes System umfassend eine Ausführungsform eines erfindungsgemäßen Ladungsträgers 1 zum Beladen und Entladen des Containers 9 erkennbar ist. Der Ladungsträger 1 befindet sich in einem ersten Zustand und ist im Container 9 angeordnet und bedeckt dessen Boden, wobei Stückgut 40 (strichliert angedeutet) auf dem Ladungsträger 1 angeordnet ist.

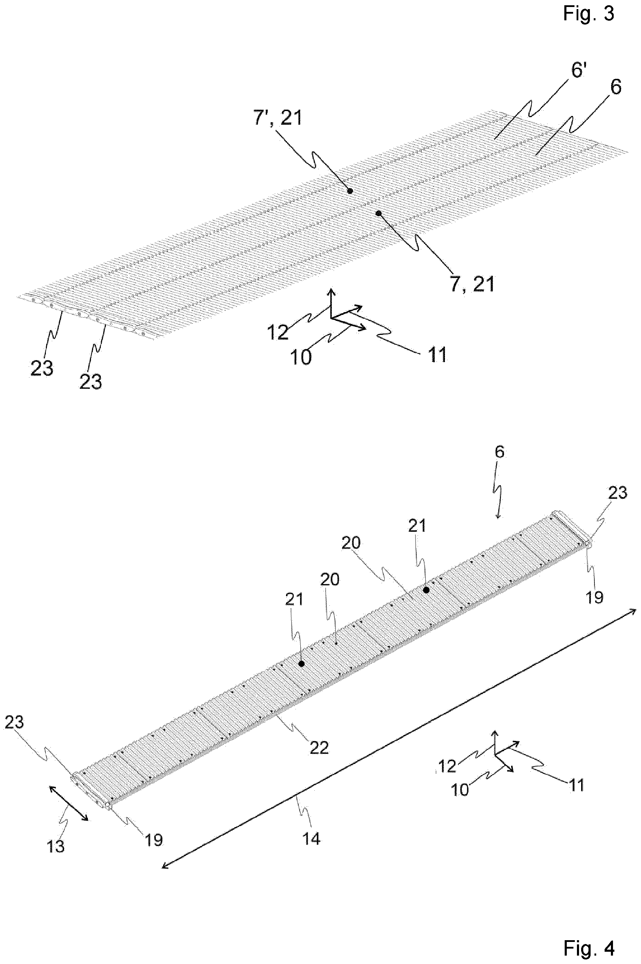

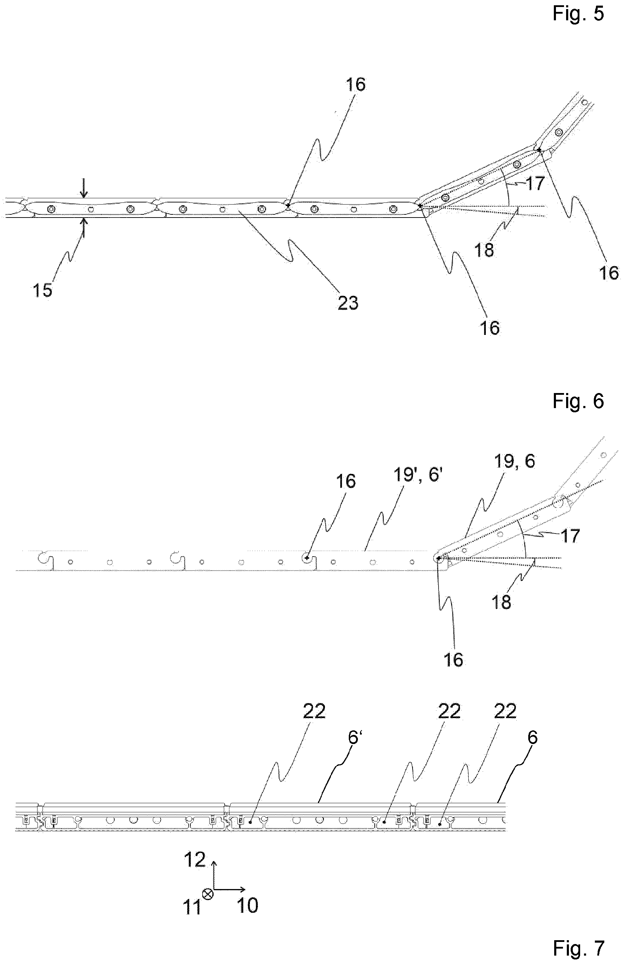

Der Ladungsträger 1, der in Fig. 2 in einer axonometrischen Ansicht dargestellt ist, umfasst starre Ladungsträgersegmente 6, 6', die in Fig. 3 und Fig. 4 nochmals detaillierter erkennbar sind. Die Ladungsträgersegmente 6, 6' weisen jeweils eine in eine dritte Richtung 12 weisende Oberseite 7, 7' auf, auf der das Stückgut 40, wie in Fig. 1 angedeutet, angeordnet werden kann. Die Ladungsträgersegmente 6, 6' erstrecken sich mit einer Segmentlänge 13 in einer ersten Richtung 10, mit einer Segmentbreite 14 in einer zweiten Richtung 11 und mit einer Segmenthöhe 15, vgl. Fig. 5, in der dritten Richtung 12. Die erste Richtung 10, die zweite Richtung 11 und die dritte Richtung 12 stehen dabei wechselseitig normal aufeinander. Typischerweise liegt die Segmentlänge 13 in einem Bereich von 0,1 m bis 1 m (z.B. 0,2 m), die Segmentbreite 14 in einem Bereich von 1 m bis 5 m und die Segmenthöhe 15 in einem Bereich von 0,015 m bis 0,1 m (z.B. 0,025 m).

Im ersten Zustand des Ladungsträgers 1 sind die Oberseiten 7, 7' der Ladungsträgersegmente 6, 6' im Wesentlichen parallel zueinander und in erster Richtung 10 gesehen hintereinander angeordnet, um eine im Wesentlichen ebene Ladefläche 8 auszubilden. Die Abmessungen des Ladungsträgers 1 können klarerweise auf die Abmessungen des Containers 9 abgestimmt sein, sodass die Ladefläche 8 im Wesentlichen den gesamten Boden des Containers 9 abdeckt und sämtliches Stückgut 40, das in den Container 9 gegeben wird, auf oder über der Ladefläche 8 angeordnet wird, wenn der Ladungsträger 1 in seinem ersten Zustand vollständig im Container 9 angeordnet ist.

Im ersten Zustand erstreckt sich der Ladungsträger 1 gegen die erste Richtung 10 gesehen von einem ersten Ladungsträgersegment 24 zu einem letzten Ladungsträgersegment 25, zwischen denen die restlichen Ladungsträgersegmente 6, 6' angeordnet sind.

Die Ladungsträgersegmente 6, 6' sind derart gelenkig miteinander verbunden, dass die Ladungsträgersegmente 6, 6' um parallel zur zweiten Richtung 11 verlaufende Schwenkachsen 16 gegeneinander verschwenkbar sind, vgl. Fig. 5. Dabei ist im ersten Zustand jeweils eines der Ladungsträgersegmente 6, das in der ersten Richtung 10 gesehen auf ein jeweils anderes der Ladungsträgersegmente 6' folgt, mit seiner Oberseite 7 in Richtung der Oberseite 7' des anderen Ladungsträgersegments 6' verschwenkbar, um den Ladungsträger 1 durch zumindest abschnittsweises spiralförmiges Aufrollen der Ladungsträgersegmente 6, 6' aus dem ersten Zustand in einen zweiten Zustand überführen zu können, wobei der Ladungsträger 1 aus dem zweiten Zustand durch Abrollen in den ersten Zustand überführbar ist.

Entsprechend lässt sich der Ladungsträger 1 im zweiten Zustand sehr platzsparend in einer Speicherkassette 2, die Teil des in Fig. 1 dargestellten Systems ist, speichern bzw. verwahren.

Beim bzw. durch das Aufrollen kann der Ladungsträger 1 aus dem Container 9 in einer Zugrichtung 29 herausgezogen werden, wodurch der Container 9 entladen wird bzw. das Stückgut 40 aus dem Container 9 gefördert wird.

Um sicherzustellen, dass beim Entladen möglichst kein Stückgut 40 gegen die Zugrichtung 29 vom Ladungsträger 1 rutschen kann und der Container 9 vollständig entleert wird, ist bei der dargestellten Ausführungsform ein Wandelement 26 vorgesehen, das vom letzten Ladungsträgersegment 25 senkrecht in der dritten Richtung 12 absteht. Das Wandelement 26 ist dabei so dimensioniert, dass die Querschnittsfläche des Innenraums des Containers 9 vollständig abgedeckt wird, sodass kein Stückgut 40 beim Entladen im Container 9 verbleibt.

Zur gelenkigen Verbindung weisen die Ladungsträgersegmente 6, 6' im dargestellten Ausführungsbeispiel jeweils zwei Schwenkglieder 19, 19' auf, wobei die Schwenkglieder 19, 19' von zwei aufeinander folgenden Ladungsträgersegmenten 6, 6' verschwenkbar ineinander greifen, vgl. Fig. 6. Die Schwenkglieder 19, 19' sind dabei so geformt, dass im ersten Zustand des Ladungsträgers 1 das jeweils eine der Ladungsträgersegmente 6 mit seiner Oberseite 7 in Richtung der Oberseite 7' des jeweils anderen Ladungsträgersegments 6' um einen ersten Schwenkwinkel 17 ("nach oben") verschwenkbar ist, der im dargestellten Ausführungsbeispiel maximal 30° beträgt, und dass im ersten Zustand des Ladungsträgers 1 das jeweils eine der Ladungsträgersegmente 6 mit seiner Oberseite 7 von der Oberseite 7' des jeweils anderen Ladungsträgersegments 6' weg um einen zweiten Schwenkwinkel 18 ("nach unten") verschwenkbar ist, der im dargestellten Ausführungsbeispiel maximal 3° beträgt. D.h. der Schwenkwinkelbereich ist bzw. die Schwenkwinkel 17, 18 sind durch Formschluss der Schwenkglieder 19, 19' beschränkt, wodurch sich der Ladungsträger 1 nicht nur in der Zugrichtung 29 problemlos ziehen lässt, sondern auch in einer entgegengesetzten Schubrichtung 30 problemlos schieben bzw. drücken lässt, um den Ladungsträger 1 samt darauf angeordnetem Stückgut 40 in den Container 9 hinein zu schieben und so den Container 9 zu beladen.

In zweiter Richtung 11 gesehen sind die Schwenkglieder 19 des Ladungsträgersegments 6 hintereinander und in einander gegenüberliegenden Endbereichen des Ladungsträgersegments 6 angeordnet.

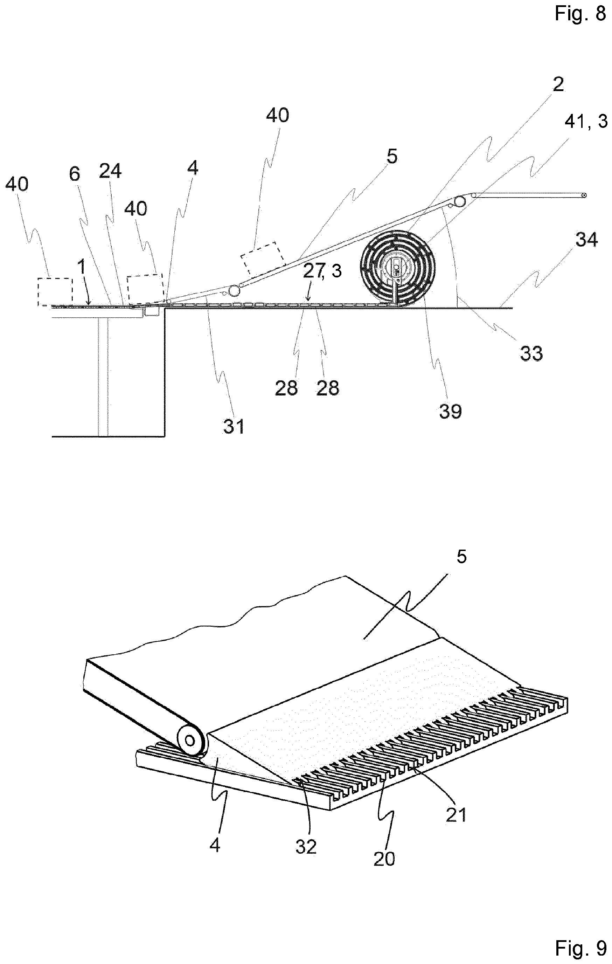

Im dargestellten Ausführungsbeispiel weisen die Ladungsträgersegmente 6, 6' jeweils mehrere Deckplatten 20 auf, die in zweiter Richtung 11 gesehen hintereinander angeordnet sind. Die Deckplatten 20 sind jeweils mit einer Rillenstruktur 21 versehen und bilden damit die Oberseiten 7, 7' aus. Die Rillenstruktur 21 erweist sich als günstig für den Halt des Stückguts 40 auf dem Ladungsträger 1. Darüberhinaus wird die Rillenstruktur 21 im dargestellten Ausführungsbeispiel für einen möglichst schonenden Übergang auf einen weiterführenden Förderer 5 des erfindungsgemäßen Systems ausgenutzt, indem ein Übergangsstück 4 des Systems zwischengeschaltet ist, das auf einer Unterseite 31 eine korrespondierende Rillenstruktur 32 aufweist, die in die Rillenstruktur 21 der Ladungsträgersegmente 6, 6' eingreift, vgl. Fig. 1 und Fig. 9. Hierdurch kann das Übergangsstück 4 das auf den Deckplatten 20 angeordnete Stückgut 40 unterfahren, um ein widerstandsarmes, stufenloses Gleiten des Stückguts 40 auf das Übergangsstück 4 (genauer auf eine der Unterseite 31 gegenüberliegenden Oberseite des Übergangsstücks 4) und in der Folge auf den weiterführenden Förderer 5 zu ermöglichen. Der weiterführende Förderer 5, der im dargestellten Ausführungsbeispiel als Bandförderer ausgebildet ist, ist zur Förderung in einer Förderebene vorgesehen, die mit der ersten Richtung 10 der Ladungsträgersegmente 6, 6' des im ersten Zustand befindlichen Ladungsträgers 1 bzw. mit der Zugrichtung 29 einen spitzen Winkel 33 (im dargestellten Ausführungsbeispiel ca. 22°) einschließt. Durch diese Neigung kann das Stückgut 40 rasch auf ein höheres Niveau, das höher als jenes der Be-/Entladebucht 34 ist, gebracht werden, um den Weitertransport zu vereinfachen.

Bei der dargestellten Ausführungsform des erfindungsgemäßen Ladungsträgers bzw. Systems ist in erster Richtung 10 gesehen nach dem Wandelement 26 eine Abgleitplatte 37 vorgesehen, die schräg vom Wandelement 26 in Richtung Ladefläche 8 verläuft. Die Abgleitplatte 37 endet jedoch nicht auf der Ladefläche 8 (bzw. der Oberseite 7 eines Ladungsträgersegments 6), sondern bereits etwas über dieser. D.h. es besteht ein kleiner Spalt zwischen der Ladefläche 8 und der Abgleitplatte 37, wodurch die Abgleitplatte 37 vom Übergangsstück 4 abschnittsweise unterfahrbar ist. Dieser Spalt ist im dargestellten Ausführungsbeispiel mit einer federbelasteten Klappe 38 abgedeckt, die schwenkbar an der Abgleitplatte 37 gelagert ist und zwischen der Ladefläche 8 und der Abgleitplatte 37 angeordnet ist. Die Klappe 38 wird somit vom Übergangsstück 4 weggedrückt, wenn sich die Abgleitplatte 37 in Zugrichtung 29 auf das Übergangsstück 4 zu bewegt und diesem hinreichend nahe kommt, sodass das Übergangsstück 4 die Klappe 38 berührt. Das Übergangsstück 4 wird dabei mit einem Anfangsbereich unter der Abgleitplatte 37 angeordnet, wobei ein Formschluss ein vollständiges Unterfahren der Abgleitplatte 37 durch das Übergangsstück 4 verhindert. Somit kann sämtliches Stückgut 40 auf das Übergangsstück 4 abgleiten und schließlich auf den weiterführenden Förderer 5 bewegt werden.

Im dargestellten Ausführungsbeispiel sind die Deckplatten 20 auf Trägerlamellen 22 durch Verschraubung befestigt, wobei die Deckplatten 20 in der dritten Richtung 12 gesehen hinter den Trägerlamellen 22 angeordnet sind. Jedes Ladungsträgersegment 6, 6' weist genau zwei Trägerlamellen 22 auf, die in der zweiten Richtung 11 verlaufen und parallel zueinander angeordnet sind. Die zwei Trägerlamellen 22 des jeweiligen Ladungsträgersegments 6, 6' sind dabei in erster Richtung 10 gesehen hintereinander angeordnet.

In Fig. 7 ist erkennbar, dass die Trägerlamellen 22 aufeinander folgender Ladungsträgersegmente 6, 6' so geformt sind, dass sie im ersten Zustand des Ladungsträgers 1 in erster Richtung 10 abschnittweise überlappen. Dies ermöglicht u.a. eine Abstützung der Trägerlamellen 22 gegeneinander im überlappenden Bereich, wenn, etwa bei schwerem Stückgut 40, eine besonders hohe Belastung parallel zur dritten Richtung 12 auf die Ladungsträgersegmente 6, 6' wirkt.

In Fig. 4 und Fig. 5 ist besonders deutlich erkennbar, dass im dargestellten Ausführungsbeispiel die Ladungsträgersegmente 6, 6' jeweils zwei Führungsglieder 23 aufweisen, die zur Führung des Ladungsträgers 1 beim Aufrollen und Abrollen dienen. In zweiter Richtung 11 gesehen sind die Führungsglieder 23 des jeweiligen Ladungsträgersegments 6, 6' hintereinander und in einander gegenüberliegenden Endbereichen des Ladungsträgersegments 6, 6' angeordnet, wobei sie das jeweilige Ladungsträgersegment 6, 6' nach außen begrenzen.

Die Führungsglieder 23 sind für das Zusammenwirken mit als Gleitführungen fungierenden, spiralförmig verlaufenden Führungsprofilen 39 in der Speicherkassette 2 vorgesehen, vgl. Fig. 8. Die Führungsglieder 23 weisen entlang der ersten Richtung 10 eine gekrümmte Kontur auf, vgl. Fig. 5. Letzteres erweist sich im Hinblick auf eine besonders exakte Führung als besonders vorteilhaft, weil die gekrümmte Kontur eine "flächige" Führung, gleichzeitig auf großen Abschnitten der Führungsprofile 39 (bzw. mit großen Kontaktflächen) erlaubt.

Im dargestellten Ausführungsbeispiel sind die Führungsglieder 23 ebenso wie die Schwenkglieder 19, 19' aus Stahl gefertigt (z.B. durch Laserschneiden oder Fräsen), wohingegen die Deckplatten 20 und die Trägerlamellen 22 aus einer AluminiumLegierung durch Extrusion gefertigt sind.

Im dargestellten Ausführungsbeispiel umfasst das System eine Zug- und Schubvorrichtung 3 zum Ziehen des Ladungsträgers 1 in der Zugrichtung 29 aus dem Container 9 und zum Schieben des Ladungsträgers 1 in der Schubrichtung 30 in den Container 9.

Zur Verbindung mit der Zug- und Schubvorrichtung 3 weist der Ladungsträger 1 im Bereich des ersten Ladungsträgersegments 24 mindestens ein erstes Verbindungselement, das beispielsweise Haken oder Ösen (nicht dargestellt) umfassen kann, auf. Die Zug- und Schubvorrichtung 3 weist entsprechend mindestens ein dazu passendes zweites Verbindungselement auf, das beispielsweise Ösen oder Haken (nicht dargestellt) umfassen kann, wobei die ersten und zweiten Verbindungselemente miteinander koppelbar sind. Im dargestellten Ausführungsbeispiel ist das mindestens eine zweite Verbindungselement mit einem Verbindungsstück 27 der Zug- und Schubvorrichtung 3 verbunden und an diesem angeordnet. Das Verbindungsstück 27 kann entsprechend durch die Zug- und Schubvorrichtung 3 bewegt werden und umfasst mehrere starre Verbindungsstücksegmente 28, die im Wesentlichen wie die Ladungsträgersegmente 6, 6' des Ladungsträgers 1 aufgebaut und gelenkig miteinander verbunden sind, um das Verbindungsstück 27 gemeinsam mit zumindest einem Abschnitt des Ladungsträgers 1 im zweiten Zustand in der Speichereinheit 2 aufbewahren zu können. Insbesondere weist das Verbindungsstück 27 im dargestellten Ausführungsbeispiel eine konstruktive Beschränkung des Schwenkwinkelbereichs der Verbindungsstücksegmente 28 analog zur Beschränkung des Schwenkwinkelbereichs der Ladungsträgersegmente 6, 6' auf, um das Schieben bzw. Drücken beim Abrollen besonders effektiv und sicher zu gestalten: 30° in der einen (Schwenk-)Richtung und 3° in der anderen (Schwenk-)Richtung.

Im dargestellten Ausführungsbeispiel umfasst die Zug- und Schubvorrichtung 3 eine zentral in der Speicherkassette 2 angeordnete Welle 41, die mittels eines Elektromotors (nicht dargestellt), in eine erste Drehrichtung sowie in eine entgegengesetzte zweite Drehrichtung antreibbar ist. Das Verbindungsstück 27 ist mit einem ersten Endbereich an der Welle 41 befestigt, wobei der erste Endbereich einem zweiten Endbereich gegenüberliegt und das zweite Verbindungselement im zweiten Endbereich befestigt ist, d.h. der zweite Endbereich schließt an das erste Ladungsträgersegment 24 an. Bei Drehung der Welle 41 in der ersten Drehrichtung (in Fig. 1 und Fig. 8 gegen den Uhrzeigersinn) werden entsprechend das Verbindungsstück 27 und in weiterer Folge der mit dem Verbindungsstück 27 verbundene Ladungsträger 1 um die Welle 41 herum gemäß den Führungsprofilen 39 spiralförmig aufgerollt bzw. aufgewickelt, wodurch der Ladungsträger 1 mittels des Verbindungsstücks 27 aus dem Container 9 gezogen werden kann. Bei darauffolgender Drehung der Welle 41 in der zweiten Drehrichtung (in Fig. 1 und Fig. 8 im Uhrzeigersinn) werden der Ladungsträger 1 und in weiterer Folge auch das Verbindungsstück 27 entsprechend wieder von der Welle 41 abgerollt bzw. abgewickelt, wodurch der Ladungsträger 1 über das Verbindungsstück 27 in den Container 9 hinein geschoben bzw. gedrückt werden kann.

Im dargestellten Ausführungsbeispiel ist die Speicherkassette 2 mit der Zug- und Schubvorrichtung 3 inkl. des Verbindungsstücks 27 sowie mit dem weiterführenden Förderer 5 und dem Übergangsstück 4 in einer portablen Be-/Entladeeinheit 35 zusammengefasst. Die Speicherkassette 2 ist dabei platzsparend unter dem weiterführenden Förderer 5 angeordnet. Ein Gehäuse der Be-/Entladeeinheit 35 schützt die einzelnen Komponenten gegen äußere Einflüsse. Die Be-/Entladeeinheit 35 kann je nach Bedarf zu einem Tor 36 der Be-/Entladebucht 34 geführt und an diesem angeordnet werden, um Container 9 an der Be-/Entladebucht 34 zu beladen bzw. zu entladen. Selbstverständlich wäre aber auch eine permanente Installation der Be-/Entladeeinheit 35 an der Be-/Entladebucht 34 denkbar.

### BEZUGSZEICHENLISTE

- 1: Ladungsträger
- 2: Speicherkassette
- 3: Zug- und Schubvorrichtung
- 4: Übergangsstück
- 5: Weiterführender Förderer
- 6, 6`: Ladungsträgersegment
- 7, 7': Oberseite des Ladungsträgersegments
- 8: Ladefläche
- 9: Container
- 10: Erste Richtung
- 11: Zweite Richtung
- 12: Dritte Richtung
- 13: Segmentlänge
- 14: Segmentbreite
- 15: Segmenthöhe
- 16: Schwenkachse
- 17: Erster Schwenkwinkel
- 18: Zweiter Schwenkwinkel
- 19, 19`: Schwenkglied
- 20: Deckplatte
- 21: Rillenstruktur der Deckplatte
- 22: Trägerlamelle
- 23: Führungsglied
- 24: Erstes Ladungsträgersegment
- 25: Letztes Ladungsträgersegment
- 26: Wandelement
- 27: Verbindungsstück
- 28: Verbindungsstücksegment
- 29: Zugrichtung
- 30: Schubrichtung
- 31: Unterseite des Übergangsstücks
- 32: Rillenstruktur des Übergangsstücks
- 33: Winkel
- 34: Be-/Entladebucht
- 35: Be-/Entladeeinheit
- 36: Tor
- 37: Abgleitplatte
- 38: Federbelastete Klappe
- 39: Führungsprofil
- 40: Stückgut
- 41: Welle

## Patentansprüche

1. Ladungsträger (1) zum Beladen und Entladen eines Containers (9), umfassend starre Ladungsträgersegmente (6, 6'),
wobei die Ladungsträgersegmente (6, 6') jeweils eine in eine dritte Richtung (12) weisende Oberseite (7, 7') aufweisen und sich mit einer Segmentlänge (13) in einer ersten Richtung (10) erstrecken und mit einer Segmentbreite (14) in einer zweiten Richtung (11), wobei die erste Richtung (10), die zweite Richtung (11) und die dritte Richtung (12) wechselseitig normal aufeinander stehen,
wobei in einem ersten Zustand des Ladungsträgers (1) die Oberseiten (7, 7') der Ladungsträgersegmente (6, 6') im Wesentlichen parallel zueinander und in erster Richtung (10) gesehen hintereinander angeordnet sind, um eine im Wesentlichen ebene Ladefläche (8) auszubilden,
wobei die Ladungsträgersegmente (6, 6') derart gelenkig miteinander verbunden sind, dass die Ladungsträgersegmente (6, 6') um parallel zur zweiten Richtung (11) verlaufende Schwenkachsen (16) gegeneinander verschwenkbar sind, wobei im ersten Zustand jeweils eines der Ladungsträgersegmente (6), das in der ersten Richtung (10) gesehen auf ein jeweils anderes der Ladungsträgersegmente (6') folgt, mit seiner Oberseite (7) in Richtung der Oberseite (7') des anderen Ladungsträgersegments (6') verschwenkbar ist, um den Ladungsträger (1) durch zumindest abschnittsweises spiralförmiges Aufrollen der Ladungsträgersegmente (6, 6') aus dem ersten Zustand in einen zweiten Zustand überführen zu können,
wobei der Ladungsträger (1) aus dem zweiten Zustand durch Abrollen in den ersten Zustand überführbar ist, **dadurch gekennzeichnet, dass** die Ladungsträgersegmente (6, 6') jeweils mindestens eine Deckplatte (20) aufweisen, wobei die Deckplatten (20) Rillenstrukturen (21) aufweisen, die die Oberseiten (7, 7') der Ladungsträgersegmente (6, 6') ausbilden, wobei vorzugsweise die Deckplatten (20) durch Extrusion gefertigt sind,
dass die Ladungsträgersegmente (6, 6') jeweils mindestens zwei Trägerlamellen (22) aufweisen, an denen die mindestens eine Deckplatte (20) befestigt, insbesondere festgeschraubt, ist, wobei die Trägerlamellen (22) des jeweiligen Ladungsträgersegments (6, 6') in der zweiten Richtung (11) verlaufen und parallel zueinander angeordnet sind, wobei jeweils zwei der Trägerlamellen (22) des jeweiligen Ladungsträgersegments (6, 6') in erster Richtung (10) gesehen hintereinander angeordnet sind, wobei vorzugsweise die Trägerlamellen (22) durch Extrusion gefertigt sind,
und dass die Trägerlamellen (22) aufeinander folgender Ladungsträgersegmente (6, 6') so geformt sind, dass sie im ersten Zustand des Ladungsträgers (1) in erster Richtung (10) abschnittweise überlappen.

2. Ladungsträger (1) nach Anspruch 1, **dadurch gekennzeichnet, dass** im ersten Zustand des Ladungsträgers (1) das jeweils eine der Ladungsträgersegmente (6) mit seiner Oberseite (7) in Richtung der Oberseite (7') des jeweils anderen Ladungsträgersegments (6') um einen ersten Schwenkwinkel (17) verschwenkbar ist, der maximal 45°, bevorzugt maximal 30°, beträgt,
und dass im ersten Zustand des Ladungsträgers (1) das jeweils eine der Ladungsträgersegmente (6) mit seiner Oberseite (7) von der Oberseite (7') des jeweils anderen Ladungsträgersegments (6') weg um einen zweiten Schwenkwinkel (18) verschwenkbar ist, der maximal 3°, bevorzugt maximal 1°, besonders bevorzugt 0°, beträgt.

3. Ladungsträger (1) nach einem der Ansprüche 1 bis 2,
**dadurch gekennzeichnet, dass** zur gelenkigen Verbindung der Ladungsträgersegmente (6, 6') die Ladungsträgersegmente (6, 6') jeweils mehrere, vorzugsweise zwei, Schwenkglieder (19, 19') aufweisen, wobei die Schwenkglieder (19, 19') von zwei aufeinander folgenden Ladungsträgersegmenten (6, 6') verschwenkbar ineinander greifen.

4. Ladungsträger (1) nach Anspruch 3 und nach Anspruch 2,
**dadurch gekennzeichnet, dass** die Größe des ersten Schwenkwinkels (17) und die Größe des zweiten Schwenkwinkels (18) durch Formschluss der ineinander greifenden Schwenkglieder (19, 19') aufeinander folgender Ladungsträgersegmente (6, 6') beschränkt sind.

5. Ladungsträger (1) nach einem der Ansprüche 1 bis 4,
**dadurch gekennzeichnet, dass** zur Führung des Ladungsträgers (1) beim Aufrollen und Abrollen die Ladungsträgersegmente (6, 6') jeweils mehrere, vorzugsweise zwei, Führungsglieder (23) aufweisen, die in zweiter Richtung (11) gesehen hintereinander angeordnet sind,
wobei vorzugsweise parallel zur zweiten Richtung (11) gesehen die Führungsglieder (23) das jeweilige Ladungsträgersegment (6, 6') nach außen zumindest abschnittsweise begrenzen.

6. Ladungsträger (1) nach Anspruch 5, **dadurch gekennzeichnet, dass** die Führungsglieder (23) entlang der ersten Richtung (10) eine zumindest abschnittsweise gekrümmte Kontur aufweisen.

7. Ladungsträger (1) nach einem der Ansprüche 1 bis 6,
**dadurch gekennzeichnet, dass** die Ladungsträgersegmente (6, 6') ein erstes Ladungsträgersegment (24) und ein letztes Ladungsträgersegment (25) umfassen, wobei in erster Richtung (10) gesehen zwischen dem ersten Ladungsträgersegment (24) und dem letzten Ladungsträgersegment (25) die restlichen Ladungsträgersegmente (6, 6') angeordnet sind, wenn sich der Ladungsträger (1) im ersten Zustand befindet, und dass im Bereich des ersten Ladungsträgersegments (24) mindestens ein erstes Verbindungselement zur Verbindung des Ladungsträgers (1) mit einer Zug- und Schubvorrichtung (3) vorgesehen ist.

8. Ladungsträger (1) nach Anspruch 7, **dadurch gekennzeichnet, dass** im Bereich des letzten Ladungsträgersegments (25) mindestens ein in der dritten Richtung (12) abragendes Wandelement (26) vorgesehen ist.

9. System umfassend einen Ladungsträger (1) nach einem der Ansprüche 1 bis 8 sowie eine Zug- und Schubvorrichtung (3) zum Ziehen des Ladungsträgers (1) in einer Zugrichtung (29) aus einem Container (9) und zum Schieben des Ladungsträgers (1) in einer entgegengesetzten Schubrichtung (30) in einen Container (9), wobei die Zug-und Schubvorrichtung (3) mindestens ein zweites Verbindungselement zur Verbindung mit dem Ladungsträger (1) aufweist sowie eine Speichereinheit (2) mit Führungsmitteln (39), insbesondere Führungsrollen, zum Aufrollen des Ladungsträgers, um diesen zumindest abschnittsweise im zweiten Zustand aufzubewahren.

10. System nach Anspruch 9, **dadurch gekennzeichnet, dass** das mindestens eine zweite Verbindungselement mit einem Verbindungsstück (27) verbunden ist, welches Verbindungsstück (27) durch die Zug- und Schubvorrichtung (3) bewegbar ist und mehrere starre Verbindungsstücksegmente (28) umfasst, die im Wesentlichen wie die Ladungsträgersegmente (6, 6') des Ladungsträgers (1) gelenkig miteinander verbunden sind, um das Verbindungsstück (27) gemeinsam mit zumindest einem Abschnitt des Ladungsträgers (1) im zweiten Zustand in der Speichereinheit (2) aufbewahren zu können.

11. System nach einem der Ansprüche 9 bis 10, **dadurch gekennzeichnet, dass** die Zug- und Schubvorrichtung (3) einen Reibradantrieb zum Bewegen des Ladungsträgers (1) umfasst, der in der Zugrichtung (29) gesehen vor der Speichereinheit (2) angeordnet ist.

12. System nach einem der Ansprüche 9 bis 11, **dadurch gekennzeichnet, dass** ein weiterführender Förderer (5) zur Förderung in einer Förderebene, die mit der ersten Richtung (10) der Ladungsträgersegmente (6, 6') des im ersten Zustand befindlichen Ladungsträgers (1) einen spitzen Winkel (33) einschließt, vorgesehen ist,
wobei ein dem weiterführenden Förderer (5) vorgeschaltetes Übergangsstück (4) vorgesehen ist, das dazu eingerichtet ist, mit einer Unterseite (31) auf der Oberseite (7, 7') der Ladungsträgersegmente (6, 6') abzugleiten,
wobei vorzugsweise die Unterseite (31) des Übergangsstücks (4) eine Rillenstruktur (32) aufweist.

## Claims

1. Load carrier (1) for loading and unloading a container (9), comprising rigid load-carrier segments (6, 6'),
wherein the load-carrier segments (6, 6') each have an upper side (7, 7') facing in a third direction (12) and a segment length (13) extending in a first direction (10) and a segment width (14) extending in a second direction (11), wherein the first direction (10), the second direction (11) and the third direction (12) are disposed mutually normal to one another, wherein, in a first state of the load carrier (1), the upper sides (7, 7') of the load-carrier segments (6, 6') are arranged substantially parallel to one another and, as seen in the first direction (10), one behind the other in order to form a substantially planar loading area (8),
wherein the load-carrier segments (6, 6') are connected to one another in an articulated manner such that the load-carrier segments (6, 6') can be pivoted in relation to one another about pivot axes (16) extending parallel to the second direction (11), wherein, in the first state, a respective one of the load-carrier segments (6), which, as viewed in the first direction (10), follows a respectively other one of the load-carrier segments (6'), can be pivoted with its upper side (7) in the direction of the upper side (7') of the other load-carrier segment (6') in order to be able to transfer the load carrier (1) from the first state into a second state by at least sectionally rolling up the load-carrier segments (6, 6') in spiral form,
wherein the load carrier (1) can be transferred from the second state into the first state by unrolling,
**characterized in that** the load-carrier segments (6, 6') each have at least one cover plate (20), wherein the cover plates (20) have grooved structures (21) which form the upper sides (7, 7') of the load-carrier segments (6, 6'), wherein the cover plates (20) are preferably produced by extrusion,
**in that** the load-carrier segments (6, 6') each have at least two carrier slats (22) to which the at least one cover plate (20) is fastened, in particular screwed tightly, wherein the carrier slats (22) of the respective load-carrier segment (6, 6') extend in the second direction (11) and are arranged parallel to one another, wherein in each case two of the carrier slats (22) of the respective load-carrier segment (6, 6') are arranged one behind the other, as seen in the first direction (10), wherein the carrier slats (22) are preferably produced by extrusion,
and **in that** the carrier slats (22) of successive load-carrier segments (6, 6') are shaped in such a way that, in the first state of the load carrier (1), they overlap in sections in the first direction (10).

2. Load carrier (1) according to claim 1, **characterized in that,** in the first state of the load carrier (1), the respective one of the load-carrier segments (6) can be pivoted with its upper side (7) in the direction of the upper side (7') of the respective other load-carrier segment (6') by a first pivoting angle (17) which is at most 45°, preferably at most 30°,
and **in that**, in the first state of the load carrier (1), the respective one of the load-carrier segments (6) can be pivoted with its upper side (7) away from the upper side (7') of the respective other load-carrier segment (6') by a second pivoting angle (18) which is a maximum of 3°, preferably a maximum of 1°, particularly preferably 0°.

3. Load carrier (1) according to one of claims 1 to 2, **characterized in that,** for the articulated connection of the load-carrier segments (6, 6'), the load-carrier segments (6, 6') each have a plurality of, preferably two, pivoting links (19, 19'), wherein the pivoting links (19, 19') of two successive load-carrier segments (6, 6') pivotably engage in one another.

4. Load carrier (1) according to claim 3 and according to claim 2, **characterized in that** the magnitude of the first pivoting angle (17) and the magnitude of the second pivoting angle (18) are limited by positive locking of the interlocking pivoting links (19, 19') of successive load-carrier segments (6, 6').

5. Load carrier (1) according to one of claims 1 to 4, **characterized in that,** in order to guide the load carrier (1) during rolling up and unrolling, the load-carrier segments (6, 6') each have a plurality of, preferably two, guide links (23) which, as viewed in the second direction (11), are arranged one behind the other,
wherein preferably the guide links (23), as viewed parallel to the second direction (11), delimit the respective load-carrier segment (6, 6') outwardly at least in sections.

6. Load carrier (1) according to claim 5, **characterized in that** the guide links (23) along the first direction (10) have a contour that is curved at least in sections.

7. Load carrier (1) according to one of claims 1 to 6, **characterized in that** the load-carrier segments (6, 6') comprise a first load-carrier segment (24) and a last load-carrier segment (25), wherein, as viewed in the first direction (10), the remaining load-carrier segments (6, 6') are arranged between the first load-carrier segment (24) and the last load-carrier segment (25) when the load carrier (1) is in the first state, and **in that** at least one first connecting element is provided in the region of the first load-carrier segment (24) for connecting the load carrier (1) to a pulling and pushing device (3).

8. Load carrier (1) according to claim 7, **characterized in that** at least one wall element (26) projecting in the third direction (12) is provided in the region of the last load-carrier segment (25).

9. System comprising a load carrier (1) according to one of claims 1 to 8 and a pulling and pushing device (3) for pulling the load carrier (1) in a pulling direction (29) out of a container (9) and for pushing the load carrier (1) in an opposite pushing direction (30) into a container (9), wherein the pulling and pushing device (3) has at least one second connecting element for connection to the load carrier (1), as well as a storage unit (2) having guide means (39), in particular guide rollers, for rolling up the load carrier in order to store it at least in sections in the second state.

10. System according to claim 9, **characterized in that** the at least one second connecting element is connected to a connecting piece (27), which connecting piece (27) is movable by the pulling and pushing device (3) and comprises a plurality of rigid connecting piece segments (28) which are connected to one another in an articulated manner, substantially like the load-carrier segments (6, 6') of the load carrier (1), in order to be able to store the connecting piece (27) together with at least one section of the load carrier (1) in the second state in the storage unit (2).

11. System according to one of claims 9 to 10, **characterized in that** the pulling and pushing device (3) comprises a friction wheel drive for moving the load carrier (1), which is arranged in front of the storage unit (2) as seen in the pulling direction (29).

12. System according to one of claims 9 to 11, **characterized in that** a continuing conveyor (5) is provided for conveying in a conveying plane which encloses an acute angle (33) with the first direction (10) of the load-carrier segments (6, 6') of the load carrier (1) in the first state, wherein a transition piece (4) is provided upstream of the continuing conveyor (5), which transition piece is arranged to slide with an underside (31) on the upper side (7, 7') of the load-carrier segments (6, 6'), wherein preferably the underside (31) of the transition piece (4) has a grooved structure (32).

## Revendications

1. Support de cargaison (1) pour charger et décharger un conteneur (9), comprenant des segments de support de cargaison rigides (6, 6'),
dans lequel les segments de support de cargaison (6, 6') comportent chacun une face supérieure (7, 7') orientée dans une troisième direction (12) et s'étendent sur une longueur de segment (13) dans une première direction (10) et sur une largeur de segment (14) dans une deuxième direction (11), la première direction (10), la deuxième direction (11) et la troisième direction (12) étant perpendiculaires réciproquement les unes aux autres,
dans lequel, dans un premier état du support de cargaison (1), les faces supérieures (7, 7') des segments de support de cargaison (6, 6') sont pour l'essentiel parallèles les unes aux autres et, vus dans la première direction (10), disposés les uns derrière les autres pour former une surface de chargement (8) sensiblement plane,
dans lequel les segments de support de cargaison (6, 6') sont articulés les uns avec les autres de telle manière que les segments de support de cargaison (6, 6') peuvent pivoter les uns par rapport aux autres autour d'axes de pivotement (16) parallèles à la deuxième direction (11), un des segments de support de cargaison (6), qui suit un autre des segments de support de cargaison (6') dans la première direction (10) pouvant, dans le premier état, pivoter avec sa face supérieure (7) en direction de la face supérieure (7') de l'autre segment de support de cargaison (6') pour faire passer le support de cargaison (1) du premier état à un deuxième état en enroulant au moins en partie en spirale les segments de support de cargaison (6, 6'),
dans lequel le support de cargaison (1) peut être amené du deuxième état au premier état en le déroulant,
**caractérisé en ce que** les segments de support de cargaison (6, 6') comportent chacun au moins une plaque de couverture (20), les plaques de couverture (20) comportant des structures rainurées (21) qui forment les faces supérieures (7, 7') des segments de support de cargaison (6, 6'), les plaques de couverture (20) étant de préférence fabriquées par extrusion,
**en ce que** les segments de support de cargaison (6, 6') comportent chacun au moins deux lamelles de support (22) sur lesquels l'au moins une plaque de couverture (20) est fixée, en particulier vissée, les lamelles de support (22) du segment de support de cargaison (6, 6') respectif s'étendent dans la deuxième direction (11) et sont alignées parallèlement les unes aux autres, dans lequel deux lamelles de support (22) du segment de support de cargaison (6, 6') respectif étant disposées l'une derrière l'autre vus dans la première direction (10), les lamelles de support (22) étant de préférence fabriquées par extrusion,
et **en ce que** les lamelles de support (22) de segments de support de cargaison (6, 6') qui se suivent sont conformées de telle façon qu'elles se chevauchent en partie dans la première direction (10) dans le premier état du support de cargaison (1).

2. Support de cargaison (1) selon la revendication 1, **caractérisé en ce que**, dans le premier état du support de cargaison (1), l'un des segments de support de cargaison (6) peut pivoter avec sa face supérieure (7) vers la face supérieure (7') de l'autre segment de support de cargaison (6') selon un premier angle de pivotement (17) de 45° au maximum, de préférence de 30° au maximum,
et **en ce que**, dans le premier état du support de cargaison (1), l'un des segments de support de cargaison (6) peut pivoter en éloignant sa face supérieure (7) de la face supérieure (7') de l'autre segment de support de cargaison (6') selon un deuxième angle de pivotement (18) de 3° au maximum, de préférence de 1° au maximum, en particulier de 0°.

3. Support de cargaison (1) selon l'une des revendications 1 à 2, **caractérisé en ce que**, pour la liaison articulée des segments de support de cargaison (6, 6'), les segments de support de cargaison (6, 6') comportent chacun plusieurs, de préférence deux, éléments pivotants (19, 19'), lesquels éléments pivotants (19, 19') de deux segments de support de cargaison (6, 6') qui se suivent se mettent en prise l'un dans l'autre de façon pivotante.

4. Support de cargaison (1) selon la revendication 3 et selon la revendication 2, **caractérisé en ce que** la grandeur du premier angle de pivotement (17) et la grandeur du deuxième angle de pivotement (18) sont limitées par l'engagement positif des éléments pivotants (19, 19') de segments de support de cargaison (6, 6') successifs qui se mettent en prise les uns dans les autres.

5. Support de cargaison (1) selon l'une des revendications 1 à 4, **caractérisé en ce que**, pour le guidage du support de cargaison (1) lors de l'enroulage et du déroulage, les segments de support de cargaison (6, 6') comportent chacun plusieurs, de préférence deux, éléments de guidage (23) disposés l'un derrière l'autre vus dans la deuxième direction (11), les éléments de guidage (23) délimitant de préférence le segment de support de cargaison (6, 6') correspondant vers l'extérieur, au moins en partie, vus parallèlement à la deuxième direction (11).

6. Support de cargaison (1) selon la revendication 5, **caractérisé en ce que** les éléments de guidage (23) ont un contour au moins en partie courbé le long de la première direction (10).

7. Support de cargaison (1) selon l'une des revendications 1 à 6, **caractérisé en ce que** les segments de support de cargaison (6, 6') comprennent un premier segment de support de cargaison (24) et un dernier segment de support de cargaison (25), les segments de support de cargaison (6, 6') restants étant disposés entre le premier segment de support de cargaison (24) et le dernier segment de support de cargaison (25) vus dans la première direction (10) quand le support de cargaison (1) se trouve dans le premier état, et **en ce qu'**au moins un premier élément de liaison est prévu au niveau du premier segment de support de cargaison (24) pour relier le support de cargaison (1) à un dispositif de traction et de poussée (3).

8. Support de cargaison (1) selon la revendication 7, **caractérisé en ce qu'**au moins un élément de paroi (26) qui dépasse dans la troisième direction (12) est prévu au niveau du dernier segment de support de cargaison (25).

9. Système comprenant un support de cargaison (1) selon l'une des revendications 1 à 8 et un dispositif de traction et de poussée (3) pour tirer le support de cargaison (1) dans une direction de traction (29) pour sortir d'un conteneur (9) et pour pousser le support de cargaison (1) dans une direction de poussée opposée (30) pour entrer dans un conteneur (9), dans lequel le dispositif de traction et de poussée (3) comporte au moins un deuxième élément de liaison pour la liaison avec le support de cargaison (1), ainsi qu'une unité de stockage (2) avec des moyens de guidage (39), en particulier des galets de guidage, pour enrouler le support de cargaison et ranger celui-ci au moins en partie dans le deuxième état.

10. Système selon la revendication 9, **caractérisé en ce que** l'au moins un deuxième élément de liaison est relié à une pièce de liaison (27), laquelle pièce de liaison (27) peut être mue par le dispositif de traction et de poussée (3) et comprend plusieurs segments de pièce de liaison rigides (28) qui sont reliés les uns aux autres de façon articulée, sensiblement comme les segments de support de cargaison (6, 6') du support de cargaison (1), pour pouvoir ranger la pièce de liaison (27) dans l'unité de stockage (2) avec au moins une partie du support de cargaison (1) dans le deuxième état.

11. Système selon l'une des revendications 9 à 10, **caractérisé en ce que** le dispositif de traction et de poussée (3) comprend un entraînement par roue à friction pour déplacer le support de cargaison (1), qui est disposé avant l'unité de stockage (2) vus dans le sens de traction (29).

12. Système selon l'une des revendications 9 à 11, **caractérisé en ce qu'**un convoyeur d'aval (5) est prévu pour le transport dans un plan de transport formant un angle aigu (33) avec la première direction (10) des segments de support de cargaison (6, 6') du support de cargaison (1) dans le premier état, une pièce de transition (4) étant prévue en amont du convoyeur d'aval (5) et agencée pour glisser par une face inférieure (31) sur la face supérieure (7, 7') des segments de support de cargaison (6, 6'), la face inférieure (31) de la pièce de transition (4) présentant de préférence une structure nervurée (32).
